**Europäisches Patentamt**

**European Patent Office**

**Office européen des brevets**

(19)

(11) Veröffentlichungsnummer : **0 158 151**
**B1**

(12) **EUROPÄISCHE PATENTSCHRIFT**

(45) Veröffentlichungstag der Patentschrift :
23.12.87

(51) Int. Cl.⁴ : **A 01 B 73/06**

(21) Anmeldenummer : 85102978.5

(22) Anmeldetag : 15.03.85

(54) Geräterahmen für Bodenbearbeitungswerkzeuge.

(30) Priorität : 23.03.84 US 592523

(43) Veröffentlichungstag der Anmeldung :
16.10.85 Patentblatt 85/42

(45) Bekanntmachung des Hinweises auf die Patenter-
teilung : 23.12.87 Patentblatt 87/52

(84) Benannte Vertragsstaaten :
DE FR GB

(56) Entgegenhaltungen :
GB-A- 2 057 833
US-A- 4 211 287

(73) Patentinhaber : **DEERE & COMPANY**
**1 John Deere Road**
**Moline Illinois 61265 (US)**

(72) Erfinder : **Landphair, Donald Keith**
**3965 Wakonda Drive**
**Bettendorf Iowa 52722 (US)**
Erfinder : **Salley, Gordon Lee**
**3724 - 14th Street**
**Moline, Illinois 61265 (US)**

(74) Vertreter : **Feldmann, Bernhard et al**
**DEERE & COMPANY European Office, Patent Depart-**
**ment Steubenstrasse 36-42 Postfach 503**
**D-6800 Mannheim 1 (DE)**

Jouve, 18, rue St-Denis, 75001 Paris, France

## Beschreibung

Die Erfindung bezieht sich auf einen Geräterahmen für Bodenbearbeitungswerkzeuge bzw. Säeinrichtungen mit zwei mittels Gelenkbolzen horizontal und vertikal verschwenkbar gelagerten Rahmenträgern, die in eine Arbeitsstellung und in eine Transportstellung bringbar und an einen Zentralrahmen angeschlossen sind, wobei an den Rahmenträgern Führungselemente starr angeschlossen sind, die zumindest in einer Stellung eine Verschwenkung in vertikaler Ebene für mindestens einen bestimmten Bereich begrenzen.

Es ist ein Bodenbearbeitungsgerät mit einem Hauptrahmen bekannt (US-A-4 211 287), an dem zwei horizontal und vertikal verschwenkbare Seitenrahmen angeschlossen sind, die von einer Arbeitsstellung in eine Transportstellung verschwenkbar sind. Im Bereich der Anschlußstellen der Seitenrahmen sind Fangausnehmungen angeordnet, die zur Aufnahme von kreisförmigen, an den Seitenrahmen angeordneten Kontaktelementen dienen. Bei Verschwenkung der Seitenrahmen von der Transportstellung in die Arbeitsstellung werden die Kontaktelemente in den Fangausnehmungen aufgenommen und begrenzen dadurch eine vertikale Verschwenkung der Seitenrahmen. Infolge der vielen Einzelteile, insbesondere durch die Verwendung von zwei Fangtaschen und den zugehörigen Kontaktelementen, ist eine derartige Vorrichtung zur Begrenzung der Vertikalverschwenkung der Seitenrahmen aufwendig und teuer.

Demgegenüber liegt der Erfindung die Aufgabe zugrunde, die Vorrichtung zur Begrenzung der Vertikalverschwenkung der Seitenrahmen derart auszubilden und anzuordnen, daß mit einen Minimum an Bauteilen ausgekommen werden kann, wobei insbesondere eine automatische Festlegung der Seitenrahmen in Vertikalrichtung erfolgt, wenn diese in ihre Transportstellung verschwenkt werden. Diese Aufgabe ist dadurch gelöst worden, daß die beiden Führungselemente der Rahmenträger sich unmittelbar gegenüberliegen und bei einer Horizontalverschwenkung von der Arbeitsstellung in die Transportstellung der Rahmenträger gegenseitig zur Anlage kommen bzw. mit feststehenden Teilen in Eingriff bringbar sind und dann eine Vertikalverschwenkung der Rahmenträger ausschalten. Durch die vorteilhafte Ausbildung und Anordnung der unmittelbar gegenüberliegenden Führungselemente wird bei dem Schwenkvorgang der Seitenrahmen von einer Arbeitsstellung in eine Transportstellung nach einem bestimmten Stellweg der Seitenrahmen automatisch eine Begrenzung der Verschwenkung der Seitenrahmen in Vertikalrichtung herbeigeführt und somit sichergestellt, daß die in Transportstellung parallel zueinander verlaufenden Rahmenträger lediglich die Bewegung des Hauptrahmens mitmachen und sich nicht gegenüber diesen, insbesondere in Vertikalrichtung, verstellen lassen. Hierzu ist es vorteilhaft, daß die Rahmenträger mittels Hydraulikzylindern horizontal verschwenkbar sind, wobei die Führungselemente nach einem bestimmten Stellweg der Rahmenträger gegenseitig zur Anlage kommen und dabei die Vertikalverschwenkung begrenzen.

In weiterer Ausgestaltung der Erfindung ist es vorteilhaft, daß die beiden gegenüberliegenden Führungselemente horizontal verlaufende Platten sind, die jeweils an ihren außenliegenden Seiten eine kurvenförmige Nockenfläche aufweisen, und daß die Nockenfläche aus einer gebogenen Stirnplatte besteht, die an der äußeren Kante des Führungselementes befestigt ist, wobei die Höhe der Stirnplatte größer ist als die Dicke des Führungselementes. Da ein jeder Seitenrahmen mit einem Führungselement ausgerüstet ist, das beispielsweise als horizontal verlaufende Platte ausgebildet sein kann, lassen sich diese auf einfache Weise so einander zuordnen, daß diese sich gegenseitig berühren und somit die Vertikalverschwenkung der Seitenrahmen nach einem bestimmten Stellweg der Seitenrahmen begrenzen. Da sich die nockenförmige Stirnplatte über die Ober- und Unterseite der Platte hinaus erstreckt, wird die Stabilität und somit die Arretierung der Rahmenträger weiterhin verbessert. Die relativ breiten Stirnplatten gewährleisten ferner auch dann eine gegenseitige Anlage der Stirnplatten, wenn diese nicht auf gleicher Höhe genau zueinander ausgerichtet sind. Dabei ist es vorteilhaft, daß das Führungselement mit dem vertikal verlaufenden Gelenkbolzen starr verbunden ist, an den der Rahmenträger drehfest angeschlossen ist, wobei der Gelenkbolzen in am Zentralrahmen angeordneten Lagerteilen drehbar aufgenommen ist, und daß die Nockenfläche auf einem Kreisbogen verläuft, der koaxial zur geometrischen Mittellinie des vertikalen Gelenkbolzens verläuft. In weiterer Ausgestaltung der Erfindung ist es vorteilhaft, daß der Gelenkbolzen zur Aufnahme des Führungselementes am oberen Ende des Gelenkbolzens in zwei mit Abstand zueinander angeordneten Lagern bzw. Lagerbuchsen aufgenommen ist, die über Tragplatten mit Querträgern des Zentralrahmens fest verbunden sind. Durch die Verwendung von zwei mit Abstand zueinander angeordneten Lagern bzw. Lagerbuchsen wird eine einwandfreie Führung der Rahmenträger gewährleistet, wenn diese von ihrer Arbeitsstellung beispielsweise in ihre Transportstellung verschwenkt werden. Ferner lassen sich ohne weiteres die Rahmenträger endseitig jeweils an eine Buchse drehfest anschließen, die den Gelenkbolzen drehfest aufnimmt. Dabei ist es vorteilhaft, daß der Achsabstand zwischen den Mittelachsen der Gelenkbolzen gleich dem doppelten Radius eines Kreisbogensegmentes des Führungselementes ist und die Berührungsstelle der beiden Kreisbogensegmente auf der gleichen Ebene liegt wie die Verlängerung der geometrischen Mittellinie des horizontal verlaufenden Gelenkbolzens.

Im folgenden wird die Erfindung anhand von lediglich einen Ausführungsweg darstellenden Zeichnungen näher erläutert. Es zeigt :

Fig. 1 eine Draufsicht einer Sämaschine mit horizontal verschwenkbaren Rahmen mit einer Gelenkverbindung, die eine vertikale sowie horizontale Verstellung der Rahmenträger zuläßt, sowie zwei nockenförmig ausgebildeten Anlageteilen, die eine Festlegung der Gelenke gewährleisten, wenn die Rahmenträger sich in ihrer Transportstellung befinden,

Fig. 2 die nockenförmigen Anlageteile im größeren Maßstab in Arbeitsstellung der Sämaschine,

Fig. 3 eine ähnliche Ansicht wie in Fig. 2, wobei sich jedoch die Anlageteile gegenseitig berühren und die Rahmenträger ihre Transportstellung eingenommen haben,

Fig. 4 einen Schnitt entlang der Linie 4-4 gemäß Fig. 2,

Fig. 5 einen Schnitt entlang der Linie 5-5 gemäß Fig. 4.

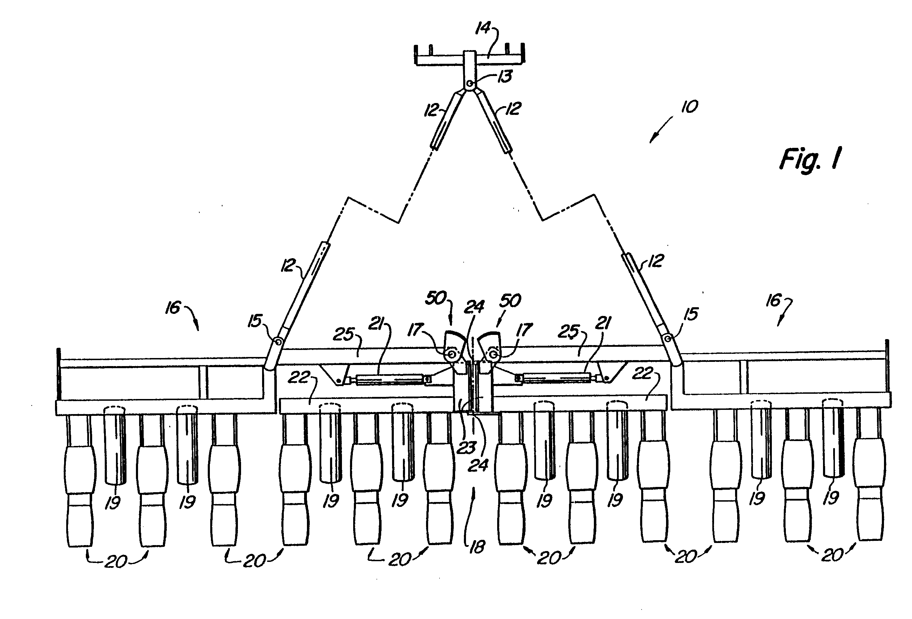

In der Zeichnung ist mit 10 ein Geräterahmen eines Bodenbearbeitungsgerätes bzw. einer Sämaschine bezeichnet, der mit zwei nach vorne verlaufenden, V-förmig zueinander zusammengeschlossenen Gestängen 12 ausgerüstet ist, die über einen Kupplungsbolzen 13 an eine Ackerschiene 14 eines in der Zeichnung nicht dargestellten Schleppers angeschlossen sind. Die dem Kupplungsbolzen 13 gegenüberliegenden Enden der Gestänge 12 sind über Gelenkbolzen 15 an rechte und linke Rahmenträger 16 vertikal schwenkbar angeschlossen. Die Rahmenträger 16 sind spiegelbildlich zueinander ausgebildet, und ein jeder Rahmenträger ist über einen Gelenkbolzen 17 an einen Zentralrahmen 18 vertikal schwenkbar angeschlossen. Die beiden Rahmenträger 16 sowie der Zentralrahmen 18 stützen sich auf Laufrädern 19 ab, wobei an den einzelnen Rahmenträgern 16 Bodenbearbeitungswerkzeuge oder Säeinrichtungen 20 (Fig. 1) angeschlossen sein können.

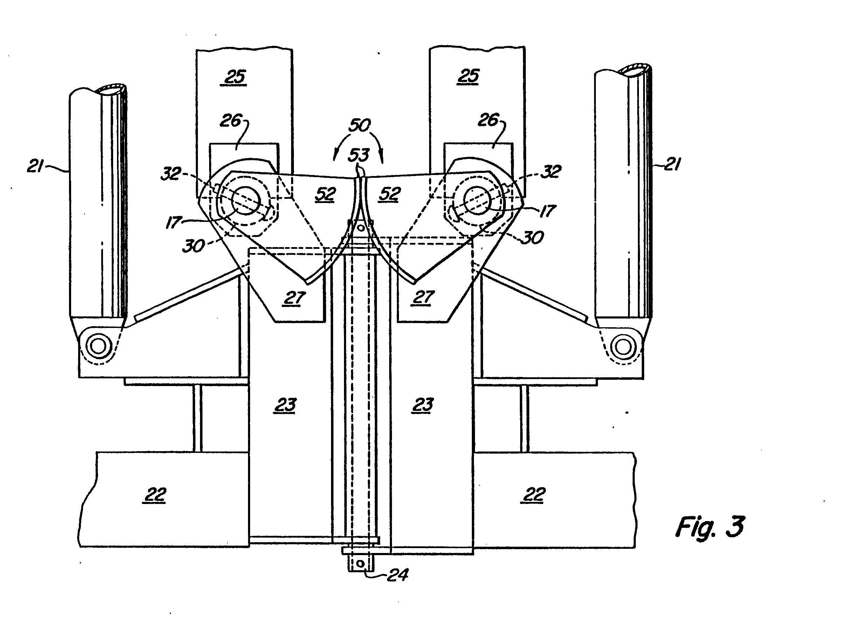

Der Geräterahmen 10 läßt sich von einer Arbeitsstellung gemäß Fig. 1 über wahlweise betätigbare Hydraulikzylinder 21 in eine Transportstellung (siehe Fig. 3) verstellen. Durch Einfahren der Kolbenstangen der Hydraulikzylinder 21 werden die beiden Rahmenträger 16 um ihre Gelenkbolzen 17 auf einem Kreisbogen verschwenkt, bis sie auf einer Querebene nebeneinander ausgerichtet sind (siehe Fig. 1).

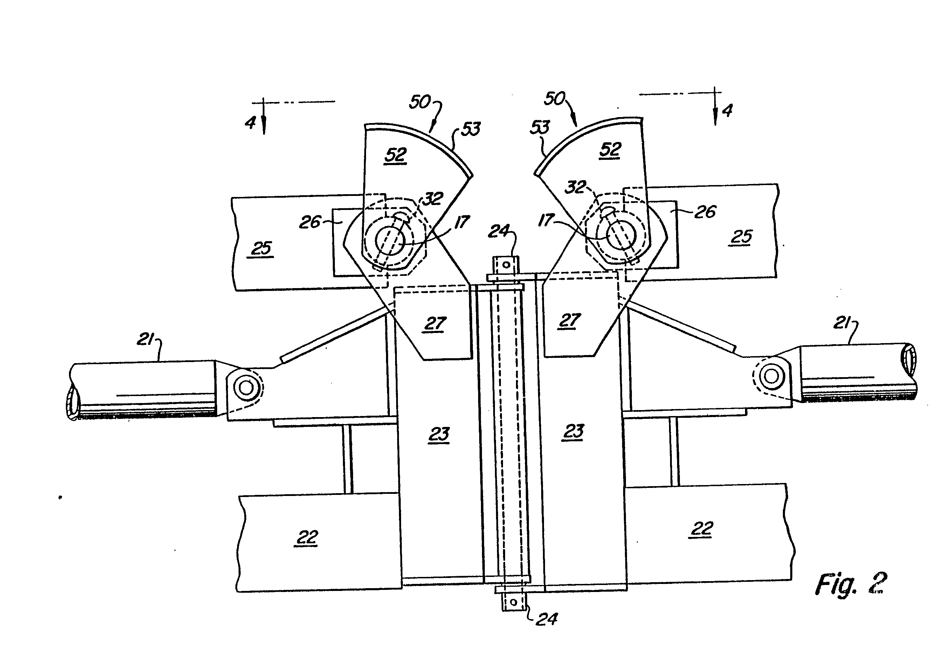

Der Zentralrahmen 18 weist zwei nebeneinander liegende Querträger 22 auf, die über einen horizontal verlaufenden Gelenkbolzen 24 vertikal schwenkbar miteinander verbunden sind. An einem jeden Querträger 22 ist endseitig je ein Tragteil 23 fest angeschlossen, die sich jeweils rechtwinklig zu den Querträgern 22 erstrecken. Die beiden Tragteile verlaufen parallel zueinander und sind, wie aus Fig. 2 hervorgeht, über den Gelenkbolzen 24 miteinander verbunden. Der horizontal verlaufende Gelenkbolzen 24 gestattet eine vertikale Verschwenkung der Rahmenträger 16, wenn sich diese gemäß Fig. 1 in ihrer Arbeitsstellung befinden. Die Rahmenträger 16 sind hierzu über die Tragteile 23 mit den Querträgern 22 fest verbunden. Die Rahmenträger 16 sind endseitig mit je einem horizontal verlaufenden Träger 25 ausgerüstet, an denen jeweils ein nockenförmig ausgebildeter Anlageteil 50 starr angeordnet und hierzu mit dem Gelenkbolzen 17 beispielsweise verschweißt ist, der wiederum mit dem Träger 25 fest verbunden ist.

Wie insbesondere aus den Figuren 2 bis 4 hervorgeht, ist der vertikal verlaufende Gelenkbolzen 17 in einer vertikal verlaufenden Buchse 30 aufgenommen, die im Bereich des oberen und unteren Endes jeweils einen Kragen 26 aufweist, die mit der Buchse 30 sowie mit dem Träger 25 beispielsweise verschweißt sein können. Der Gelenkbolzen 17 ist in einem oberen und unteren Lager 31 drehbar aufgenommen, das mit einer oberen und unteren Tragplatte 27 fest verbunden ist. Wie insbesondere aus Fig. 2 hervorgeht, sind die beiden Tragplatten 27 V-förmig zueinander angeordnet und mit den Tragteilen 23 starr verbunden. Der Gelenkbolzen 17 sowie die Buchse 30 weisen auf der gleichen Höhe liegende Bohrungen zur Aufnahme eines Arretierungsbolzens 32 auf, der verhindert, daß sich der Gelenkbolzen 17 in der Buchse 30 dreht, und somit ermöglicht, daß der Träger 25 über die Buchse 30 und den Gelenkbolzen 17 in den Lagern 31 verschwenkbar aufgenommen ist. Da die nockenförmigen Anlageteile 50 mit dem Gelenkbolzen 17 fest verbunden sind, drehen sich diese ebenfalls, wenn die Träger 25 zwischen einer Arbeitsstellung und einer Transportstellung verschwenkt werden.

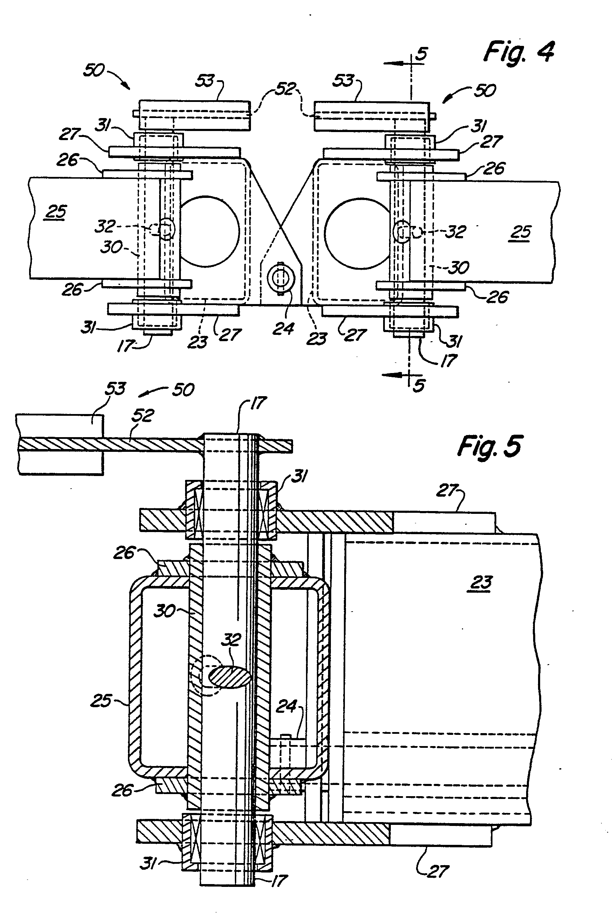

Die nockenförmigen Anlageteile bestehen aus horizontal verlaufenden Platten 52, die zur Aufnahme des oberen Endes des Gelenkbolzens 17 mit einer Bohrung versehen sind. Die Platte 52 ist, wie aus Fig. 5 hervorgeht, mit dem Gelenkbolzen 17 fest verschweißt. Die Platte 52 weist ein Führungselement bzw. eine Nockenfläche 53 auf, die an der äußeren Kante der Platte 52 vorgesehen ist.

Wenn der Geräterahmen 10 in eine Transportstellung gemäß Fig. 3 verstellt wird, neigen die Rahmenträger 16 dazu, daß sie zusammenklappen, da sie mittels des Gelenkbolzens 24 noch vertikal verschwenkbar sind. Wie aus Fig. 3 hervorgeht, kommen die nockenförmigen Anlageteile 50 gegenseitig zur Anlage, wenn der Geräterahmen 10 bzw. die zugehörigen Rahmenträger 16 in eine Transportstellung zusammengeführt werden, und verhindern dadurch, daß der Gelenkbolzen 24 wirksam ist, da nunmehr über die nockenförmigen Anlageteile eine starre Verbindung zwischen den Trägern 25 bzw. den Rahmenträgern 16 geschaffen wird. Die Führungselemente bzw. Nockenflächen 53 der gegenüberliegenden Platten 52 kommen bereits dann miteinander in Kontakt, wenn die Rahmenträger 16 in etwa zwischen ihrer Arbeitsstellung und ihrer Transportstellung 50 % des Schwenkweges zurückgelegt haben. Die Nockenflächen 53 bleiben in Kontakt miteinander, wenn die Rahmenträger 16 ihre Stellung gemäß Fig. 3 eingenommen haben, die der Transportstellung entspricht. Solange sich die Anlageteile 50 berühren, ist eine gegenseitige Verschwenkung der Rahmenträger 16 über den Gelenkbolzen 24 ausgeschlossen.

Die Anlageteile 50 sind so ausgelegt, daß automatisch eine Arretierung des Gelenkbolzens und somit eine Unterbrechung der vertikalen Schwenkbewegung der Rahmenträger 16 erfolgt, wenn diese einen Teil ihres Schwenkweges in ihrer Transportstellung zurückgelegt haben. Hierdurch entfällt auch eine weitere Installation von Druckgestängen, die für die Transportfahrt eine entsprechende Stabilisierung der Rahmenträger herbeiführen würden.

**Patentansprüche**

1. Geräterahmen für Bodenbearbeitungswerkzeuge bzw. Säeinrichtungen mit zwei mittels Gelenkbolzen (17, 24) horizontal und vertikal verschwenkbar gelagerten Rahmenträgern (16), die in eine Arbeitsstellung und in eine Transportstellung bringbar und an einen Zentralrahmen (18) angeschlossen sind, wobei an den Rahmenträgern (16) Führungselemente (53) starr angeschlossen sind, die zumindest in einer Stellung eine Verschwenkung in vertikaler Ebene für mindestens einen bestimmten Bereich begrenzen, dadurch gekennzeichnet, daß die beiden Führungselemente (53) der Rahmenträger (16) sich unmittelbar gegenüberliegen und bei einer Horizontalverschwenkung von der Arbeitsstellung in die Transportstellung der Rahmenträger (16) gegenseitig zur Anlage kommen bzw. mit feststehenden Teilen in Eingriff bringbar sind und dann eine Vertikalverschwenkung der Rahmenträger (16) ausschalten.

2. Geräterahmen nach Anspruch 1, dadurch gekennzeichnet, daß die Rahmenträger (16) mittels Hydraulikzylindern (21) horizontal verschwenkbar sind, wobei die Führungselemente (53) nach einem bestimmten Stellweg der Rahmenträger (16) gegenseitig zur Anlage kommen und dabei die Vertikalverschwenkung begrenzen.

3. Geräterahmen nach Anspruch 1 oder 2, dadurch gekennzeichnet, daß die beiden gegenüberliegenden Führungselemente (53) horizontal verlaufende Platten (52) sind, die jeweils an ihren außenliegenden Seiten eine kurvenförmige Nockenfläche aufweisen.

4. Geräterahmen nach einem oder mehreren der vorherigen Ansprüche, dadurch gekennzeichnet, daß die Nockenfläche aus einer gebogenen Stirnplatte besteht, die an der äußeren Kante des Führungselementes (53) befestigt ist, wobei die Höhe der Stirnplatte größer ist als die Dicke des Führungselementes (53).

5. Geräterahmen nach einem oder mehreren der vorherigen Ansprüche, dadurch gekennzeichnet, daß sich die nockenförmige Stirnplatte über die Ober- und Unterseite der Platte (52) hinaus erstreckt.

6. Geräterahmen nach einem oder mehreren der vorherigen Ansprüche, dadurch gekennzeichnet, daß das Führungselement (53) mit dem vertikal verlaufenden Gelenkbolzen (17) starr verbunden ist, an den Rahmenträger (16) drehfest angeschlossen ist, wobei der Gelenkbolzen (17) in am Zentralrahmen (18) angeordneten Lagerteilen drehbar aufgenommen ist.

7. Geräterahmen nach einem oder mehreren der vorherigen Ansprüche, dadurch gekennzeichnet, daß die Nockenfläche auf einem Kreisbogen verläuft, der koaxial zur geometrischen Mittellinie des vertikalen Gelenkbolzens (17) verläuft.

8. Geräterahmen nach einem oder mehreren der vorherigen Ansprüche, dadurch gekennzeichnet, daß der Gelenkbolzen (17) zur Aufnahme des Führungselementes (53) am oberen Ende des Gelenkbolzens (17) in zwei mit Abstand zueinander angeordneten Lagern bzw. Lagerbuchsen (31) aufgenommen ist, die über Tragplatten (27) mit Querträgern (22) des Zentralrahmens (18) fest verbunden sind.

9. Geräterahmen nach einem oder mehreren der vorherigen Ansprüche, dadurch gekennzeichnet, daß die Rahmenträger (16) endseitig jeweils an eine Buchse (30) drehfest angeschlossen sind, die den Gelenkbolzen (17) drehfest aufnimmt.

10. Geräterahmen nach einem oder mehreren der vorherigen Ansprüche, dadurch gekennzeichnet, daß der Achsabstand zwischen den Mittelachsen der Gelenkbolzen (17) gleich dem doppelten Radius eines Kreisbogensegmentes des Führungselementes (53) ist und die Berührungsstelle der beiden Kreisbogensegmente auf der gleichen Ebene liegt wie die Verlängerung der geometrischen Mittellinie des horizontal verlaufenden Gelenkbolzens (24).

**Claims**

1. A machine frame for soil tilling implements or sowing appliances with two frame supports (16) which are horizontally and vertically pivotable by means of joint bolts (17, 24) and which can be brought into a working position and a transport position and are connected to a central frame (18), wherein the frame supports (16) have guide elements (53) rigidly connected thereto which, in at least one position, delimit a pivotal movement in the vertical plane for at least one particular region, characterised in that the two guide elements (53) of the frame supports (16) are located directly opposite each other and, during a horizontal pivoting from the working position into the transport position of the frame supports (16), they come into mutual contact or can be brought into engagement with stationary parts and thereafter stop a vertical pivoting of the frame supports (16).

2. A machine frame according to Claim 1, characterised in that the frame supports (16) are horizontally pivotable by means of hydraulic cylinders (21), while the guide elements (53), after completion of a specific positioning displacement by the frame supports (16), come into mutual contact and thereby delimit the extent of the vertical pivoting.

3. A machine frame according to Claim 1 or 2, characterised in that the two oppositely located guide elements (53) are horizontal plates (52), each of which has on its outside edge a curved cam surface.

4. A machine frame according to one or several of the preceding Claims, characterised in that the cam surface consists of a bent front plate, which is fastened to the outer edge of the guide element (53), the height of the front plate being greater than the thickness of the guide element (53).

5. A machine frame according to one or several of the preceding Claims, characterised in that the cam-shaped front plate extends beyond the upper and lower face of the plate (52).

6. A machine frame according to one or several of the preceding Claims, characterised in that the guide element (53) is rigidly connected with the vertically extending joint bolt (17), to which the frame support (16) is connected secure against rotation, while the joint bolt (17) is rotatably lodged in bearing parts arranged on the central frame (18).

7. A machine frame according to one or several of the preceding Claims, characterised in that the cam surface extends along a circular arc which is coaxial relative to the geometrical median line of the vertical joint bolt (17).

8. A machine frame according to one or several of the preceding Claims, characterised in that the joint bolt (17) for accommodating the guide element (53), is at its upper end located in two spaced bearings or bearing bushes (31), which are fixedly connected through support plates (27) with cross-members (22) of the central frame (18).

9. A machine frame according to one or several of the preceding Claims, characterised in that the ends of the frame supports (16) are each connected secured against rotation to a bush (30) which accommodates the joint bolt (17) secured against rotation.

10. A machine frame according to one or several of the preceding Claims, characterised in that the axial spacing between the median axes of the joint bolts (17) equals twice the radius of a circular arc segment of the guide element (53) and the point of contact of the two circular arc segments is locaed in the same plane as the extension of the geometrical median line of the horizontally extending joint bolt (24).

**Revendications**

1. Châssis porte-outils pour outils de travail du sol ou semoirs comportant deux entretoises de châssis (16) montées de façon à pouvoir pivoter horizontalement et verticalement au moyen d'axes d'articulation (17, 24), qui peuvent être amenés dans une position de travail et dans une position ·de transport et sont raccordés à un châssis central (18), des éléments de guidage (53) étant reliés rigidement aux entretoises de châssis (16), lesquels éléments limitent, au moins dans une position, un pivotement dans un plan vertical pour au moins une zone déterminée, caractérisé en ce que les deux éléments de guidage (53) des entretoises de châssis (16) sont directement opposés et, lors du pivotement horizontal de la position de travail à la position de transport des entretoises de châssis (16), ils se placent en contact mutuel ou peuvent être amenés en prise avec des composants fixes, et empêchent alors un pivotement vertical des entretoises de châssis (16).

2. Châssis suivant la revendication 1, caractérisé en ce que les entretoises de châssis (16) peuvent pivoter horizontalement grâce à des vérins hydrauliques (21), les éléments de guidage (53) entrant en contact mutuel après un parcours de réglage déterminé des entretoises de châssis (16) et limitant ainsi le pivotement vertical.

3. Châssis suivant la revendication 1 ou 2, caractérisé en ce que les deux éléments de guidage opposés (53) sont des plaques (52) s'étendant horizontalement, qui présentent chacune une surface de came à profil de came sur leurs faces extérieures.

4. Châssis suivant une ou plusieurs des revendications précédentes, caractérisé en ce que la surface de came est constituée par une plaque frontale arquée qui est fixée au bord extérieur de l'élément de guidage (53), la hauteur de la plaque frontale étant supérieure à l'épaisseur de l'élément de guidage (53).

5. Châssis suivant une ou plusieurs des revendications précédentes, caractérisé en ce que la plaque frontale à profil de came s'étend au-delà de la face supérieure et de la face inférieure de la plaque (52).

6. Châssis suivant une ou plusieurs des revendications précédentes, caractérisé en ce que l'élément de guidage (53) est relié rigidement à l'axe d'articulation (17) s'étendant verticalement, auquel le châssis (16) est relié non rotativement, l'axe d'articulation (17) étant reçu avec possibilité de rotation dans des éléments de palier placés sur le châssis central (18).

7. Châssis suivant une ou plusieurs des revendications précédentes, caractérisé en ce que la surface de came s'étend sur un arc de cercle qui s'étend coaxialement par rapport à l'axe· central géométrique de l'axe d'articulation vertical (17).

8. Châssis suivant une ou plusieurs des revendications précédentes, caractérisé en ce que l'axe d'articulation (17) est reçu, pour recevoir l'élément de guidage (53) à l'extrémité supérieure de l'axe d'articulation (17), dans deux paliers ou coussinets (31) placés à distance mutuelle, qui sont reliés rigidement par l'intermédiaire de plaques de support (27) à des traverses (22) du châssis central (18).

9. Châssis suivant une ou plusieurs des revendications précédentes, caractérisé en ce que les entretoises de châssis (16) sont raccordées chacune en bout non rotativement à une douille (30) qui reçoit rigidement l'axe d'articulation (17).

10. Châssis suivant une ou plusieurs des revendications précédentes, caractérisé en ce que la distance entre les axes centraux des axes d'articulation (17) est égale à deux fois le rayon d'un segment d'arc de cercle de l'élément de guidage (53), et en ce que le point de contact des deux segments d'arc de cercle est dans le même plan que le prolongement de l'axe géométrique de l'axe d'articulation (24) qui s'étend horizontalement.

Fig. I

Fig. 2

0 158 151

Fig. 3

0 158 151

Fig. 4

Fig. 5

4